(19) Europäisches Patentamt
European Patent Office
Office européen des brevets

(11) **EP 1 921 437 B1**

(12) **EUROPEAN PATENT SPECIFICATION**

(45) Date of publication and mention
of the grant of the patent:
**19.08.2009 Bulletin 2009/34**

(51) Int Cl.:
*G01N 15/06* (2006.01)        *F01N 11/00* (2006.01)
*F01N 9/00* (2006.01)

(21) Application number: **07021585.0**

(22) Date of filing: **06.11.2007**

(54) **Sensing device and method**

Messvorrichtung und Messverfahren

Dispositif et procédé de détection

(84) Designated Contracting States:
**DE GB**

(30) Priority: **08.11.2006   JP 2006302655**

(43) Date of publication of application:
**14.05.2008 Bulletin 2008/20**

(73) Proprietor: **HONDA MOTOR CO., LTD.**
**Tokyo 107-8556 (JP)**

(72) Inventors:
 • **Okayama, Tatsuya**
  **Wako-shi**
  **Saitama, 351-0193 (JP)**
 • **Iwama, Keizo**
  **Wako-shi**
  **Saitama, 351-0193 (JP)**

 • **Miki, Masanobu**
  **Wako-shi**
  **Saitama, 351-0193 (JP)**
 • **Dosaka, Kenji**
  **Wako-shi**
  **Saitama, 351-0193 (JP)**
 • **Kikuchi, Shinichi**
  **Wako-shi**
  **Saitama, 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
  WO-A-03/034053          DE-A1- 3 414 542
  DE-A1- 19 824 744        GB-A- 2 029 580
  GB-A- 2 395 567          US-A1- 2005 279 084

## Description

BACKGROUND OF THE INVENTION

Field of the Invention

The present invention relates to a sensing device and method for sensing a concentration of particulate matter (hereinafter referred to as "PM") contained in exhaust gas.

Related Art

The recent upsurge in environmental consciousness has made necessary the removal and elimination of fine PM contained in exhaust gas from combustion-generating equipment or apparatuses. Accordingly, such equipment or apparatuses are respectively equipped with a means of removing PM in exhaust gas. Moreover, PM sensors applicable to exhaust gas environments are in demand for monitoring amounts of PM contained in exhaust gas after passing through the means of removing PM and for verifying that the PM removal unit is functioning correctly.

Various types of sensing devices have been proposed as a PM sensor, such as an optical type, an electric resistance type, an electric charge type, a microwave type, and an oscillating mass sensing type (for example, U.S. Patent Application Publication No. 2003/0123059, U.S. Patent No. 6,786,075, Japanese Unexamined Patent Application Publication No. 2006-208123). For example, the optical sensor type is generally used for smoke measurement.

Here, for example, consideration is given to a case where a PM sensor is disposed in the vicinity of an exhaust port of a vehicle to monitor amounts of PM contained in vehicular exhaust gas.

An optical sensor, having a very delicate sensor surface and difficult performance assurance against contamination, requires regular maintenance. Accordingly, under a condition where regular maintenance cannot be performed, such as in the vicinity of a vehicular exhaust port, long-term use is difficult.

Vehicular exhaust gas is hot and the vicinity of the exhaust port, having high pressure, is in a severe environment. In such a severe environment, any other system (for example, an oscillating discharge sensing device) requires assurance of long-term durability, thus incurring additional cost.

As described above, PM sensors using various types of systems have been proposed to date but have some problems with type selection, durability and cost when utilized as a means for directly monitoring purification of PM contained in exhaust gas.

In GB 2 395 567 A, on which the preamble of enclosed-claim 1 is based, WO 03/034053 A2, DE 198 24 744 A1, DE 34 14 542 A1 and US 2005/0279084 A1 the sensing unit is formed by only one pair of opposing electrode plates.

In GB 2 395 567 A a heating resistor 34 is embedded in a sensor plate 10 or in an external tube 10 of the sensor unit, for thermal composition of particulates.

WO 03/034053 A2 shows heating elements for sensor regeneration, and US 2005/0279084 A1 refers to heating a sensor by discharge.

Therefore, all these documents refer to thermal decomposition of particulates, but not mechanical removal of such particulates.

In view of the aforementioned problems, it is an object of the present invention to provide a sensing device and sensing method for directly collecting PM contained in exhaust gas, sensing PM concentration and providing high durability in a severe environment, while reducing cost.

SUMMARY OF THE INVENTION

The object is achieved by a sensing device according to claim 1 and a sensing method in accordance with claim 2.

The sensing device comprises: an electrode unit to be fitted in an exhaust pipe and composed of a pair of parallel flat plates; a power supply unit adapted to apply a predetermined voltage to the electrode unit; and a sensing unit adapted to measure electrical characteristics of the electrode unit after the power supply unit applies a predetermined voltage to the electrode unit and particulate matter contained in exhaust gas inside the exhaust pipe is deposited onto the electrode unit, and adapted to sense the concentration of the particulate matter contained in the exhaust gas inside the exhaust pipe from the measured electrical characteristics.

The sensing device further comprises a removal unit for removing the particulate matter deposited on the electrode unit after the sensing unit senses a concentration of the particulate matter.

The removal unit provided for the sensing device is adapted to physically remove the particulate matter deposited on the electrode unit with a mechanically structured configuration, i.e. by brushing, using a knife or spraying/outputting air pressure.

The sensing device may further comprise a storage unit for storing data showing a relationship between the electrical characteristics of the power supply unit and the concentration of the particulate matter contained in the exhaust gas inside the exhaust pipe. The sensing unit senses the concentration of the particulate matter contained in the exhaust gas inside the exhaust pipe by referring to the data stored in the storage unit, based on the measured electrical characteristics of the electrode unit.

In the sensing device, the power supply unit is composed of a constant-current power supply unit for intermittently or continuously applying a constant current to the electrode unit or a constant-voltage power supply unit for intermittently or continuously applying a constant voltage to the electrode unit.

In the sensing device, a sensing unit senses concentration of the particulate matter contained in the exhaust gas inside the exhaust pipe by measuring change in the electrical characteristics, such as electrostatic capacity, impedance, voltage, current, phase difference between current into and voltage detected from the electrode unit, electric power or energy, of the electrode unit.

The sensing method according to the present invention comprises: a depositing step of applying a predetermined voltage to an electrode unit with a power supply unit, and depositing particulate matter contained in exhaust gas in an exhaust pipe onto an electrode unit fitted in the exhaust pipe; a measuring step of measuring electrical characteristics of the electrode unit after depositing the particulate matter onto the electrode unit in the depositing step; a sensing step of sensing a concentration of the particulate matter contained in the exhaust gas inside the exhaust pipe from the electrical characteristics measured by the measuring step; and a removing step in which particulate matter deposited on the electrode unit is removed after the concentration of the particulate matter is sensed in the sensing step; wherein in the removing step, particulate matter deposited on the electrode unit is physically removed by brushing, using a knife, or spraying /outputting air pressure.

According to the present invention, direct measurement of a concentration of PM contained in exhaust gas and measurement of PM concentration in an exhaust pipe can be performed from a low concentration by means of an electrical dust collection effect, thus providing a useful PM sensor for a highly reliable failure sensing device.

BRIEF DESCRIPTION OF THE DRAWINGS

Fig. 1 is a block diagram showing a configuration of a PM sensor according to the present invention;
Fig. 2 is a block diagram showing a configuration of a first embodiment of the PM sensor according to the present invention;
Fig. 3 is a configuration of an electrode unit of the PM sensor shown in Fig. 2;
Fig. 4 is a view showing a correlation between PM concentration and amount of PM deposited on an electrode unit;
Fig. 5 is a view showing a relationship between amount of PM deposit and electrostatic capacity;
Fig. 6 is a block diagram showing a configuration of a second embodiment of the PM sensor according to the present invention;
Fig. 7 is a view showing a signal waveform output from a power supply unit of the PM sensor shown in Fig. 6;
Fig. 8 is a view showing states of voltage waveforms having damped oscillation when the electrode unit is discharged and not discharged;
Fig. 9 is a view showing a state of a voltage waveform having damped oscillation when the electrode unit is not discharged;
Fig. 10 is a view showing a correlation between voltage and amount of PM deposit;
Fig. 11 is a view showing a correlation between energy and amount of PM deposit;
Fig. 12 is a view showing a correlation between electric power and amount of PM deposit;
Fig. 13 is a view showing a voltage waveform describing a method of measuring amount of PM deposit by oscillation cycle change;
Fig. 14 is a view showing a correlation between zero-cross time and amount of PM deposit;
Fig. 15 is a block diagram showing a configuration of a third embodiment of the PM sensor according to the present invention;
Fig. 16 is a view showing a signal waveform output from the power supply unit of the PM sensor shown in Fig. 15;
Fig. 17 is a view showing a change in electrical characteristics of the electrode unit relative to input voltage;
Fig. 18 is a view showing a voltage waveform when the electrode unit is not discharged;
Fig. 19 is a view showing a correlation between a peak voltage (Vpeak) and amount of PM deposit;
Fig. 20 is a view showing waveforms of an input current Iin and an electrode-to-electrode voltage Vout describing a method of measuring amount of PM deposit by an oscillation phase change;
Fig. 21 is a view showing a correlation between oscillation phase differences and amount of PM deposit;
Fig. 22 is a block diagram showing a configuration of a fourth embodiment of the PM sensor according to the present invention;
Fig. 23 is a block diagram showing a configuration of a fifth embodiment of the PM sensor which is not covered by the present claims;
Fig. 24 is a flow chart describing a step of removing PM utilizing discharge through the PM sensor in Fig. 23;
Fig. 25 is a block diagram showing a configuration of a sixth embodiment of the PM sensor which is not covered by the present claims;
Fig26 is a flow chart describing a step of removing PM utilizing heating through the PM sensor in Fig. 25;
Fig. 27 is a block diagram showing a configuration of a sixth embodiment of the PM sensor which is not covered by the present claims;
Fig. 28 is a flow chart describing a step of removing PM utilizing heating through the PM sensor in Fig. 27;
Fig. 29 is a view showing a first configurational pattern of a PM removing unit provided in the PM sensor according to the present invention.

Fig. 30 is a view showing a second configurational pattern of a PM removing unit provided in the PM sensor according to the present invention; and

Fig. 31 is a view showing a third configurational pattern of a PM removing unit provided in the PM sensor according to the present invention.

DETAILED DESCRIPTION OF THE INVENTION

The present invention will now be described in detail with reference to the drawings showing preferred embodiments thereof.

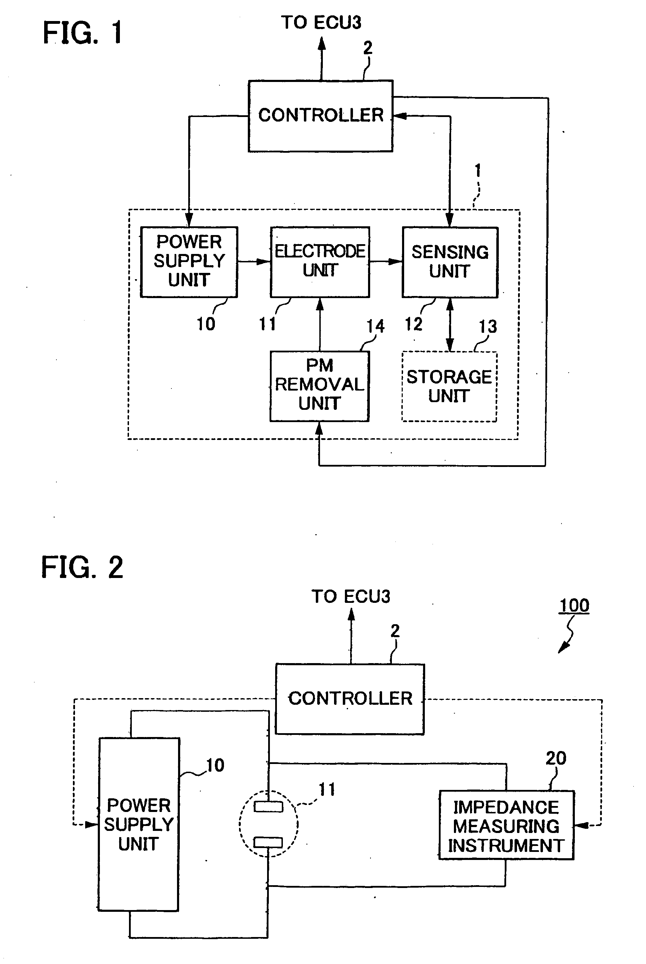

Fig. 1 is a block diagram showing a configuration of a PM sensor 1 of an example of the sensing device according to the present invention. A PM sensor 1, as shown in Fig. 1, is composed of a power supply unit 10, an electrode unit 11 fitted in an exhaust pipe and composed of a pair of parallel flat plates and a sensing unit 12 for measuring electrical characteristics of the electrode unit 11 after the power supply unit 10 applies a predetermined voltage to the electrode unit 11 and particulate matter (hereinafter referred to as "PM") contained in exhaust gas inside the exhaust pipe is deposited onto the electrode unit 11, and for sensing the concentration of the PM contained in the exhaust gas inside the exhaust pipe from the measured electrical characteristics. Moreover, the power supply unit 10 and the sensing unit 12 are connected with a controller 2, which controls the operation. Furthermore, the electrode unit 11 of the PM sensor 1 is described below as being disposed at an arbitrary position inside an exhaust pipe of a diesel engine, but is not limited especially to the diesel engine.

The controller 2 includes a function of receiving a control signal from an electronic control unit (ECU) 3 to control the power supply unit 10, and of converting a signal obtained from the sensing unit 12 to a signal appropriate to the ECU3 (such as a pulse signal or voltage signal). The PM sensor 1 is not provided with the controller 2 in cases where the ECU3 has a function activated by the controller 2. The ECU3 is an electronic control unit and controls mainly an engine and drive system.

The electrode unit 11 is constituted of a pair of parallel flat plates composed of two electric conductors. Preferably, surfaces of the two electric conductors have a dielectric substance thereon.

The power supply unit 10 applies a predetermined voltage to the electrode unit 11 with control by the controller 2. The power supply unit 10 has a function of depositing (collecting) PM onto the electrode unit 11 and changing an electric flow to measure the amount of PM deposited on the electrode unit 11. The power supply unit 10, for example, may be constituted of a constant-current power supply unit for intermittently or continuously applying a constant current to the electrode unit 11 or of a constant-voltage power supply unit for intermittently or continuously applying a constant voltage to the electrode unit 11.

There is a relationship between concentration of PM contained in exhaust gas and an amount of PM deposited on the electrode unit 11, details of which will be described later. The sensing unit 12 senses a PM concentration based on change in electrical characteristics, such as electrostatic capacity, measured from the amount of the PM deposited on the electrode unit 11, utilizing a correlation between PM concentration and the amount of the PM deposit. Specifically, the sensing unit 12 senses concentration of PM contained in the exhaust gas inside the exhaust pipe by measuring change in the electrical characteristics, such as electrostatic capacity, impedance, voltage, current, phase difference between current into and voltage detected from the electrode unit 11, electric power (W) or energy (E), of the electrode unit 11.

A step of measuring the concentration of PM contained in exhaust gas inside an exhaust pipe with the PM sensor 1 will be described below.

The electrode unit 11 is disposed at an arbitrary position inside an exhaust pipe to be subjected to PM concentration measurement. The electrode unit 11, when applied with voltage by the power supply unit 10, deposits PM contained in exhaust gas inside the exhaust pipe by means of a dust collection effect using voltage. The sensing unit 12 senses change in the electrostatic capacity of the electrode unit 11.

As one of sensing methods, there is a method of directly measuring a change in the electrostatic capacity of the electrode unit 11 using an impedance measuring instrument. As another method, there is a method of measuring the amount of the PM deposit on the electrode unit 11 by measuring a change in current, voltage, phase difference, cycle, reflected wave, power or energy, using a change in power voltage or current.

Thus, the PM sensor 1 can collect PM in the exhaust pipe and measure PM concentration at higher speed than a conventional PM sensor.

In addition, the PM sensor 1 may include a storage unit 13 storing data showing a correlation between electrical characteristics of the power supply unit 10 and concentration of PM contained in exhaust gas inside an exhaust pipe. In such a configuration, the sensing unit 12 measures electrical characteristics of the electrode unit 11 and senses the concentration of PM contained in exhaust gas inside the exhaust pipe by referring to the data stored in the storage unit 13.

The PM sensor 1 includes a PM removal unit 14 for removing PM deposited on the electrode unit 11 after the sensing unit 12 senses PM concentration, details of which will be described later.

A concrete embodiment of the PM sensor 1 will be described below. The configuration is given the same numerals for structures that are the same as in the PM sensor 1 shown in Fig. 1, and a concrete description thereof is omitted.

(First Embodiment)

The PM sensor 100 shown in a first embodiment, as shown in Fig. 2, has the sensing unit 12 constituted of an impedance measuring instrument 20 applied with an electrostatic capacity measurement method.

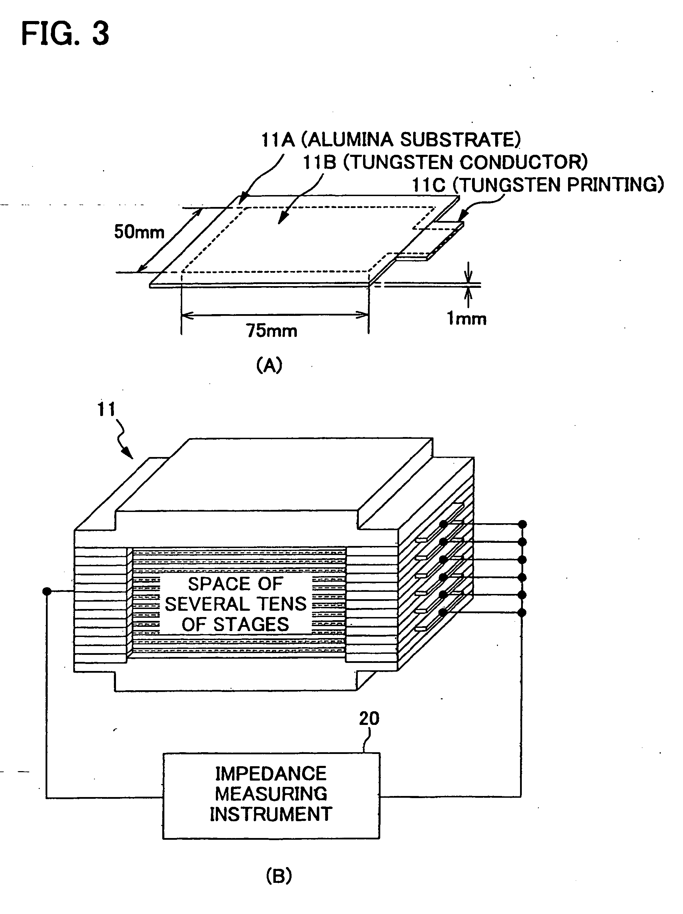

As shown in Fig. 3B, the electrode unit 11 is formed by stacking a pair of parallel flat plates in a plurality of layers (several tens of layers). Each electrode constituting the electrode unit 11, as shown in Fig. 3A, is formed by stacking a tungsten conductor 11B on the top of an alumina substrate 11A and coating tungsten printing (thin film) 11C on the top of the tungsten conductor 11B with plating or the like. An electrode of the electrode unit 11 may be formed by coating a tungsten thin film 11C on an alumina substrate 11A with plating or the like and stacking a tungsten conductor 11B on top of the tungsten thin film 11C.

The electrode unit 11 constituted in this way is connected with the power supply unit 10 applied with voltage for collecting PM and with the impedance measuring instrument 20 for measuring the electrostatic capacity of the electrode unit 11.

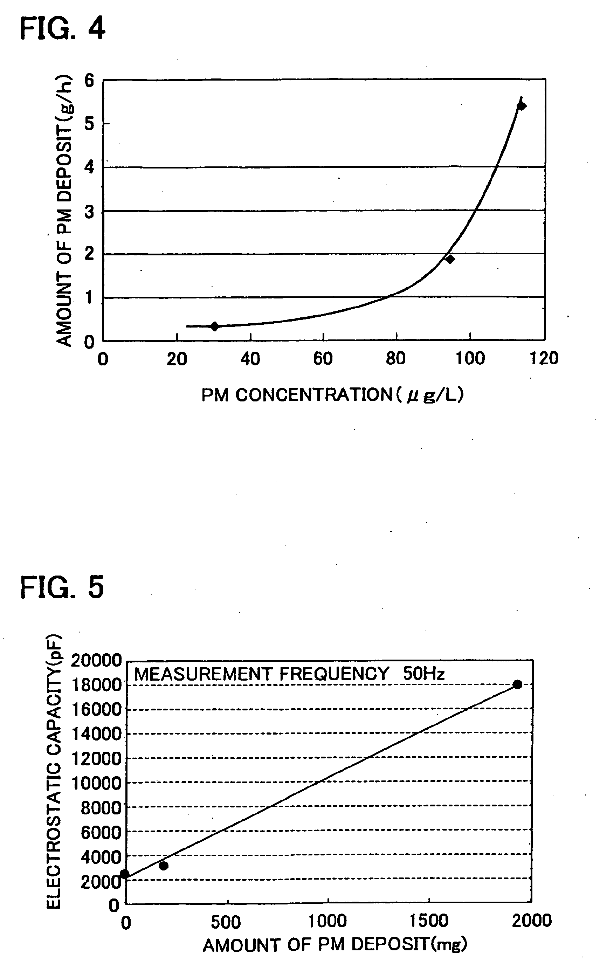

As shown in Fig. 4, PM concentration contained in exhaust gas inside an exhaust pipe stands in nonlinear correlation with the amount of the PM deposited on the electrode unit 11. A relationship between the electrostatic capacity of the electrode unit 11 and the amount of the PM deposited on the electrode unit 11 is shown in Fig. 5. In Fig. 5, a frequency of 50 Hz is used as a measurement frequency. Such a configuration, in which data showing correlations in Figs. 4 and 5 are stored in the storage unit 13 may be used.

The operation of the PM sensor 100 will be described below.

The controller 2, when receiving a command (control signal) from ECU3 to start measurement supplies a driving signal to the power supply unit 10. The power supply unit 10 applies a predetermined voltage to the electrode unit 11 according to a driving signal supplied from the controller 2. The electrode unit 11 begins to deposit (collect) PM with voltage application.

The controller 2 gives a command to stop power supply to the power supply unit 10 after a predetermined period elapses. The power supply unit 10 stops voltage application to the electrode unit 11 according to a stop command from the controller 2.

Next, the controller 2 issues a measurement command for electrostatic capacity to the impedance measuring instrument 20. The impedance measuring instrument 20 measures the electrostatic capacity of the electrode unit 11 according to a measurement command from the controller 2. The impedance measuring instrument 20 determines the amount of the PM deposit based on a relationship between the amount of the PM deposit and electrostatic capacity shown in Fig. 5, from the result of the measured electrostatic capacity. Moreover, the impedance measuring instrument 20 determines PM concentration based on a relationship between PM concentration and the amount of the PM deposit shown in Fig. 4, from the determined the amount of the PM deposit. The impedance measuring instrument 20 supplies the determined PM concentration to the controller 2. The controller 2 supplies the supplied PM concentration to the ECU3.

The ECU3 performs a PM removing command to the controller 2 based on the supplied PM concentration, details of which will be described later. The controller 2 performs a driving command to a PM removal unit 14 according to the PM removing command. The PM removal unit 14 removes PM deposited on the electrode unit 11 according to the driving command.

Thus, the PM sensor 100 can directly collect PM contained in the exhaust gas and sense PM concentration. The PM sensor 100, after sensing PM concentration, can remove PM deposited on an electrode unit 11. Furthermore, the PM sensor 100, having high durability in a severe environment, and a simple configuration, can attain cost reduction.

(Second Embodiment)

Utilizing characteristics of a power supply output for dust collection, an embodiment not provided with the above-described impedance measuring instrument 20 will be described below.

With the power supply unit 10 constituted of a constant-current power supply unit, a voltage measuring instrument is required, details of which will be described later. Measurement timing with the voltage measuring instrument depends upon whether an output voltage of the power supply unit 10 is an intermittent or continuous output. With an intermittent output, the amount of the PM deposit is measured according to change in electrical characteristics in damped oscillation during and after a change in power supply voltage or current. With continuous output, the amount of the PM deposit is measured according to a change in electrical characteristics during change of power supply voltage or current.

In the case of the power supply unit 10 constituted of a constant-voltage power supply unit, a current measuring instrument is required. Measurement timing with the current measuring instrument depends upon whether an output voltage of the power supply unit 10 is an intermittent or continuous output. With an intermittent output, the amount of the PM deposit is measured according to a change in electrical characteristics in damped oscillation during and after a change in power supply voltage or current. With a continuous output, the amount of PM deposit is measured according to a change in electrical characteristics during a change of power supply voltage or current.

A PM sensor 101 constituted of the power supply unit 10 constituted of an intermittent constant-current power supply unit will be described below.

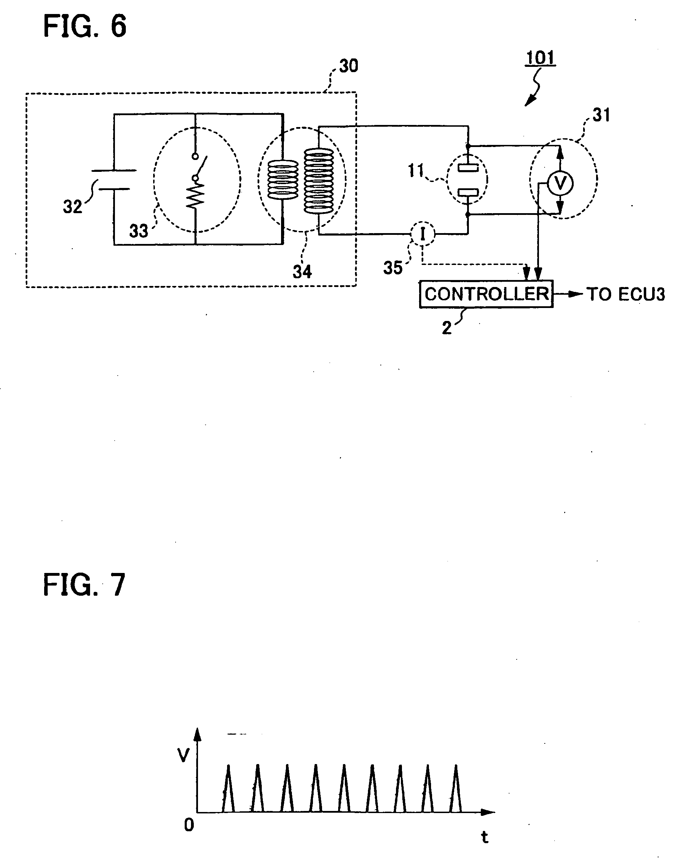

The PM sensor 101, as shown in Fig. 6, is composed of an intermittent constant-current power supply unit 30 intermittently outputting a constant current, the electrode unit 11 and a voltage measuring instrument 31 performing voltage measurement.

The intermittent constant-current power supply unit 30, as shown in Fig. 7, is a power supply unit for applying an intermittently changing voltage (DC/pulse wave) to the electrode unit 11, and is constituted of a primary power supply unit 32 outputting a DC voltage, a switching circuit 33 and a transformer (secondary power supply unit) 34 for boosting. A voltage waveform in Fig. 7 is triangular, but may be rectangular or have a saw-tooth form.

The intermittent constant-current power supply unit 30 is connected with the electrode unit 11 so as to apply voltage and is also connected with the voltage measuring instrument 31 so as to measure a voltage between electrodes in the electrode unit 11.

The voltage measuring instrument 31 is connected with the ECU3 through the controller 2. The controller 2 converts a signal supplied from the voltage measuring instrument 31 to a signal capable of being handled by the ECU3 and outputs the converted signal to the ECU3.

The ECU3 is equipped with a function of measuring a voltage of the electrode unit 11 and, when the voltage of the electrode unit 11 is measurable at that time, the voltage measuring instrument 31 and the controller 2 may be omitted. In such a configuration, the ECU3 measures the electrical characteristic (voltage) of the electrode unit 11 and calculates PM concentration from the measured result.

In a case where a parameter of an electrical characteristic used for PM deposit measurement is electric power (W) or energy (E), the PM sensor 101 is configured so as to further include a current measuring instrument 35 for measuring an electric current. The PM sensor 101 calculates energy (E) based on Equation (1) from a voltage (V) measured by the voltage measuring instrument 31 and an electric current (I) measured by the current measuring instrument 35, or electric power (W) based on Equation (2).

$$E = \int V(t)I(t)dt \quad \ldots\ldots \quad (1)$$

$$W = E/t \quad \ldots\ldots \quad (2)$$

Where t is time, V(t) is voltage at time t, and I(t) is an electric current at time t.

A step of measuring the amount of PM deposit on the electrode unit 11 with the PM sensor 101 will be described below. The intermittent constant-current power supply unit 30 applies an intermittent voltage to the electrode unit 11 as shown in Fig. 7 by switching the switching circuit 33 between on and off states at a predetermined timing.

A transformer 34, when the switching circuit 33 is in an off state, supplies an electric current from the primary power supply unit 32. An electrode of the electrode unit 11 is charged with a fixed charge, flowing due to a predetermined electric current corresponding to a winding ratio of a primary coil to a secondary coil of the transformer 34 flows to the electrode unit 11.

When application of electric charges is completed, a voltage of the electrode unit 11 reaches a peak voltage according to a relational expression, Q = CV and then attenuates while oscillating. This is because electrical charge damping-oscillates between the secondary coil of the transformer 34 and a circuit with electrostatic capacity of the electrode unit 11.

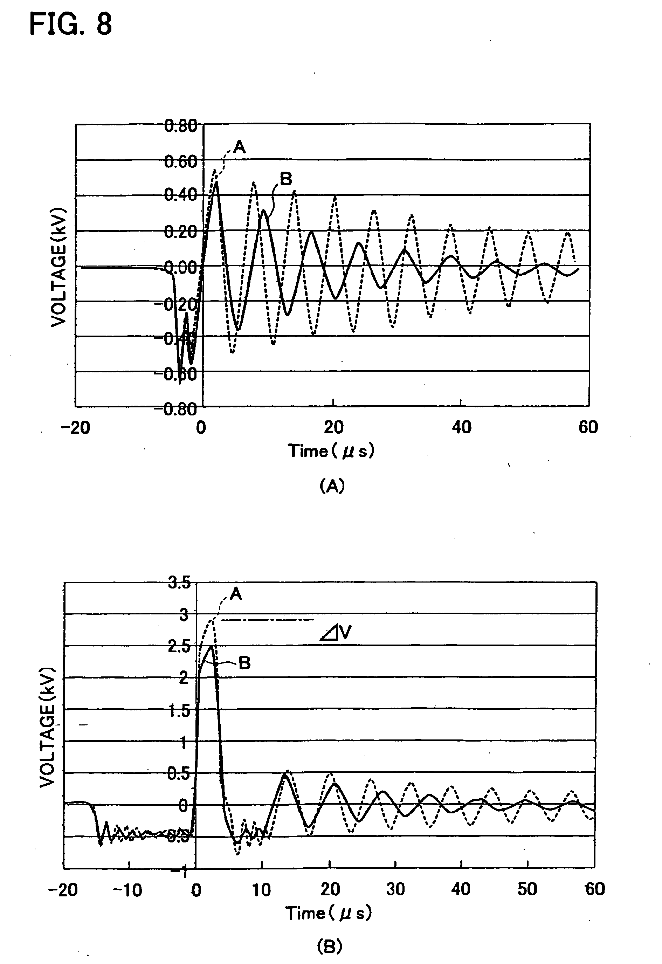

The electrostatic capacity of the electrode unit 11 changes in a state where PM is deposited on the electrode unit 11 in contrast to a state where PM is not deposited on the electrode unit 11. Accordingly, when electric charges charged onto the electrode unit 11 are constant, generated voltages change. The states of voltage change are shown in Fig. 8.

Preferably, the electrode unit 11 is not discharged to prevent collected PM from being burned and decomposed. Even after the discharge, the electrical characteristics change, therefore the amount of PM deposit can be measured. Fig. 8A shows waveforms of voltages subjected to damped oscillation when the electrode unit 11 is not discharged and Fig. 8B shows waveforms of voltages subjected to damped oscillation when the electrode unit 11 is discharged. In Figs. 8A and 8B, a waveform A shows a waveform of a voltage subjected to damped oscillation when PM is not deposited on the electrode unit 11 and a waveform B is a waveform of a voltage subjected to damped oscillation when PM is deposited on the electrode unit 11.

When PM is deposited on the electrode unit 11, electrical characteristics, such as voltage, oscillation cycle, electric power (W) and energy (E), change with the amount of PM deposit.

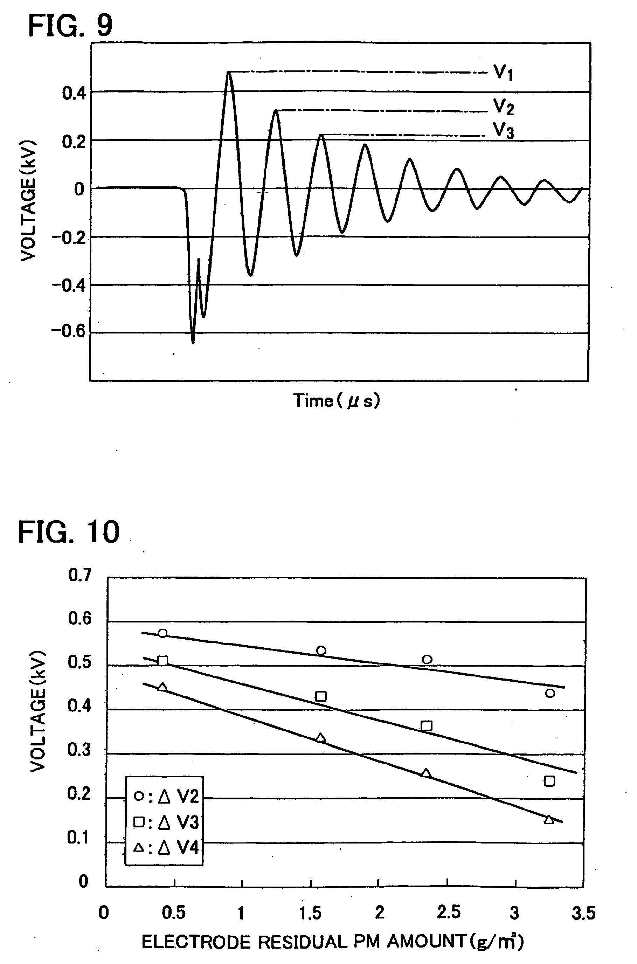

Referring now to Fig. 9, measurement of the amount of PM deposit with a voltage change will be described below. In the following description the electrode unit 11 does not discharge. Fig. 9 shows a voltage waveform when respective peak voltages are taken as V1, V2, .... Vi. Moreover, Fig. 9 shows a voltage waveform when PM is deposited on the electrode unit 11.

Between a voltage (Vi) and an amount of PM deposit, there is a correlation such as shown in Fig. 10. Accordingly, measuring (monitoring) an electrode-to-electrode voltage in the electrode unit 11 with the voltage measuring instrument 31 permits measurement of the amount of PM deposit based on a (i)th peak voltage (Vi). In addition, the amount of the PM deposit can be estimated from damping time constants of V1 and V2. Such a configuration in which data showing the correlation shown in Fig. 10 are stored in the storage unit 13 may be also used.

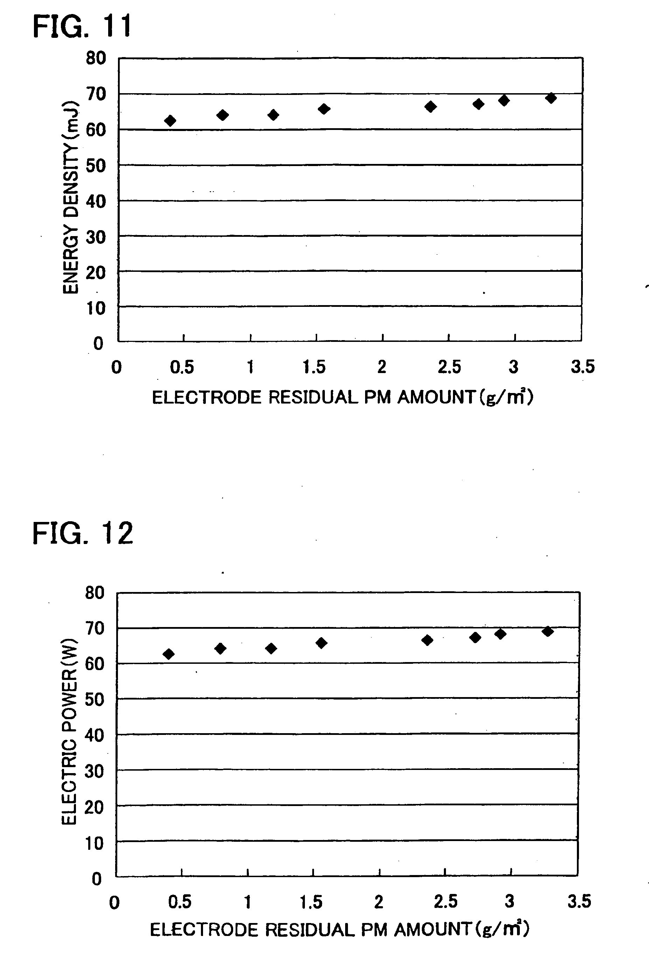

In a case where the PM sensor 101 is provided with the current measuring instrument 35, calculation of electric power (W) and energy (E) from Equations (1) and (2) described above permits measurement of these calculated values and the amount of the PM deposit. Fig. 11 shows a correlation between energy (E) and the amount of the PM deposit and Fig. 12 shows a correlation between electric power (W) and the amount of the PM deposit. Such a configuration in which data showing correlations in Figs. 11 and 12 are stored in the storage unit 13 may be used.

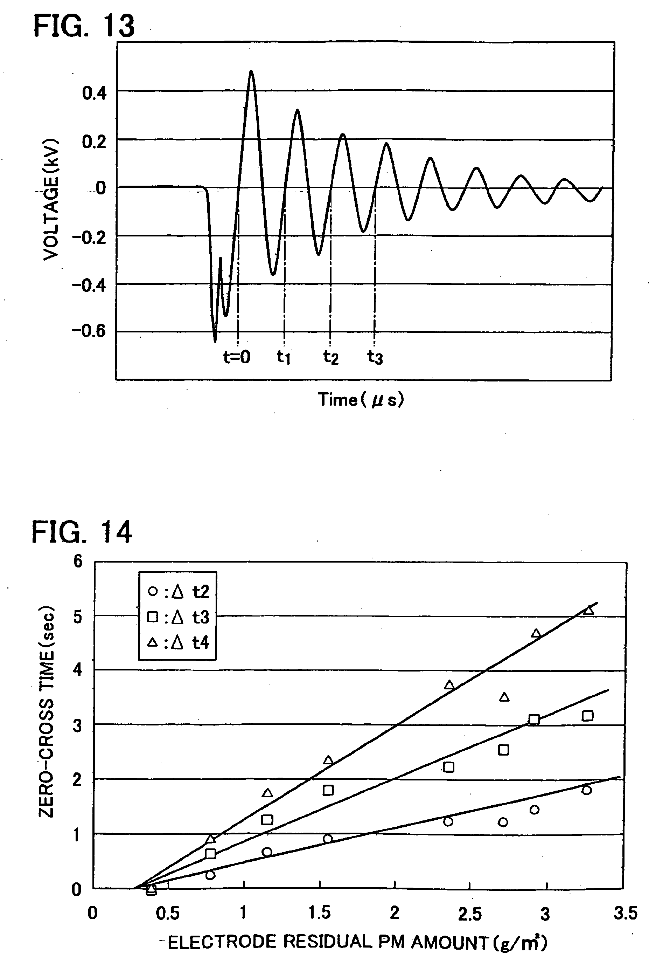

Referring next to Fig. 13, measurement of the amount of PM deposit with an oscillation cycle change will be described below. In the following description the electrode unit 11 does not discharge.

Referring now to Fig. 13, an oscillation cycle change will be described below. The time when a voltage change occurs is taken as 0 (= t) and a time required for a voltage to become zero again (zero-cross) after a first peak voltage on the negative side is taken as "t1". Time required for a voltage to become zero after the next peak voltage on the negative side is taken as "t2". Similarly, a time required for a voltage to become zero after an (i)th peak voltage on the negative side is taken as "ti".

Between a voltage (ti) and the amount of the PM deposit, there is a correlation such as shown in Fig. 14. Accordingly, the PM sensor 101 can measure an electrode-to-electrode voltage in the electrode unit 11 with the voltage measuring instrument 31, determine "t1" from the electro-to-electrode voltage and measure the amount of the PM deposit from the "ti", based on the correlation shown in Fig. 14.

The "ti" described above is a zero-cross time after a peak voltage on the negative side, but is not limited to this, that is, a zero-cross time after a peak voltage on the positive side may be defined. Moreover, the "ti" may be defined as a time when an arbitrary voltage value is obtained or a time when a voltage value of any fixed value except zero is obtained, without being defined as a zero-cross time.

In this way, the PM sensor 101 can measure the amount of the PM deposit based on change in electrical characteristics such as a voltage change of the electrode unit 11 or an oscillation cycle change, using the intermittent constant-current power supply unit 30 intermittently generating a voltage change. In addition, the PM sensor 101 can calculate PM concentration from a correlation between the measured amount of PM deposit and the concentration of PM contained in the measured exhaust gas.

(Third Embodiment)

A PM sensor 102 having the power supply unit 10 constituted of a continuous constant-current power supply unit will be described below. The above-described PM sensor 100 and the same configuration unit as the PM sensor 101 have the same characteristic.

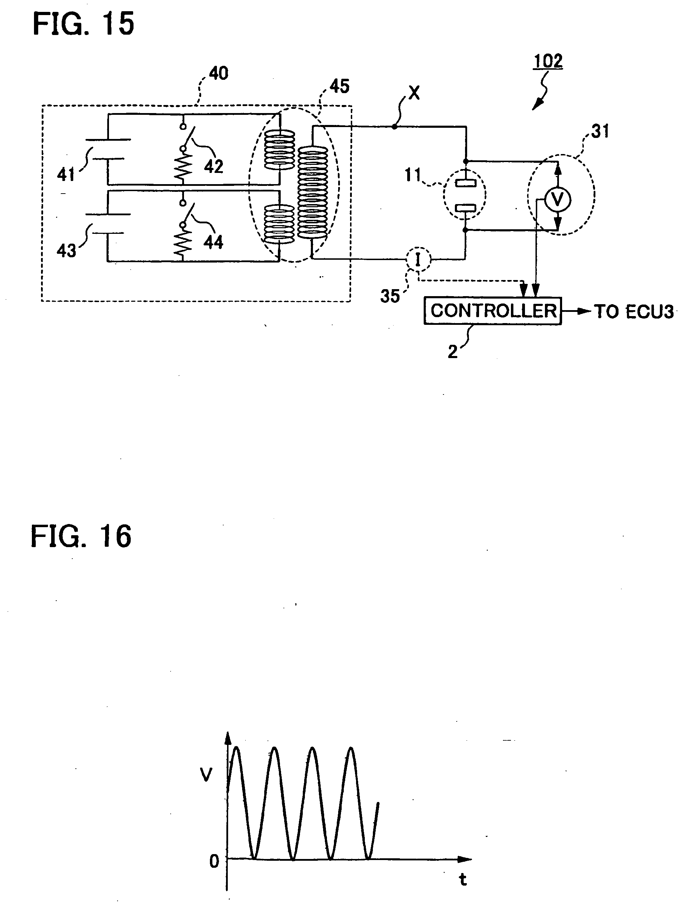

The PM sensor 102, as shown in Fig. 15, is composed of an continuous constant-current power supply unit 40 continuously outputting a constant current, the electrode unit 11 and a voltage measuring instrument 31 performing voltage measurement.

The continuous constant-current power supply unit 40, as shown in Fig. 16, is a power supply unit for applying a continuously changing voltage (DC/sine wave) to the electrode unit 11 and is composed of a first primary power supply unit 41 outputting a DC voltage, a first switching circuit 42, a second primary power supply unit 43 outputting a DC voltage, a second switching circuit 44 and a boosting transformer (secondary power supply unit) 45. In Fig. 16, voltage waveform is sinusoidal, but is not limited to this. A rectangular or saw tooth waveform may be used.

The continuous constant-current power supply unit 40 is connected with the electrode unit 11 so as to apply voltage and is also connected with the voltage measuring instrument 31 so as to measure a voltage between electrodes in the electrode unit 11.

The continuous constant-current power supply unit 40, as shown in Fig. 16, supplies a continuous sinusoidal constant current to the electrode unit 11 by performing switching between the first switching circuit 42 and the second switching circuit 44 at a predetermined timing.

The voltage measuring instrument 31 is connected with the ECU3 through the controller 2. The controller 2 converts a signal supplied from the voltage measuring instrument 31 to a signal capable of being handled by the ECU3 and outputs the converted signal to the ECU3.

The ECU3 has a function of measuring a voltage of the electrode unit 11 and, when the voltage of the electrode unit 11 is measurable at that time, the voltage measuring instrument 31 and the controller 2 may be omitted. In such a configuration, the ECU3 measures the electrical characteristic (voltage) of the electrode unit 11 and calculates PM concentration from the measured result.

In a case where a parameter of an electrical characteristic used for PM deposit measurement is electric power (W) or energy (E), the PM sensor 102 is configured so as to further include a current measuring instrument 35 for measuring an electric current. The PM sensor 102 calculates energy (E) based on Equation (1) from a voltage (V) measured by the voltage measuring instrument 31 and an electric current (I) measured by the current measuring instrument 35, or electric power (W) based on Equation (2).

The continuous constant-current power supply unit 40, as shown in Fig. 16, supplies a continuous sinusoidal constant current to the electrode unit 11 by performing switching between the first switching circuit 42 and the second switching circuit 44 at a predetermined timing.

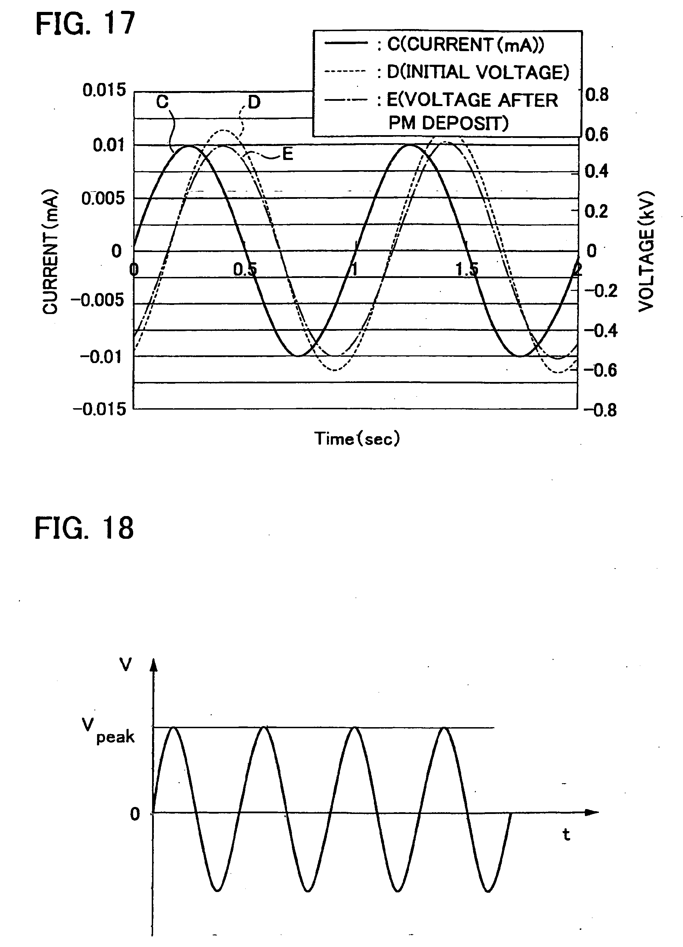

The PM sensor 102 measures, with the voltage measuring instrument 31, an electrical characteristic of the electrode unit 11 changing with a voltage applied by the continuous constant-current power supply unit 40. Fig. 17 is a view showing a change in electrical characteristics of the electrode unit 11 relative to input voltage by use of the voltage measuring instrument 31.

Fig. 17 indicates that a voltage waveform E, after the PM is deposited, changes with respect to an input voltage (initial voltage) waveform D. A current waveform C shows a current waveform output from the continuous constant-current power supply unit 40 to the electrode unit 11.

Preferably, the electrode unit 11 is not discharged to prevent collected PM from being burned and decomposed. Even after the discharge, the electrical characteristics change, therefore the amount of PM deposit can be measured.

When PM is deposited on an electrode of the electrode unit 11 in this way, a change will occur in electrical characteristics, such as electric power (W) and energy (E) obtained from voltage and current, oscillation phase, voltage.

Here, a description is given of measurement of an amount of PM deposit by a voltage change. Fig. 18 shows a voltage waveform when the electrode unit 11 is not discharged, which is assumed in the following description. A peak voltage occurring at this time is taken as $V_{peak}$.

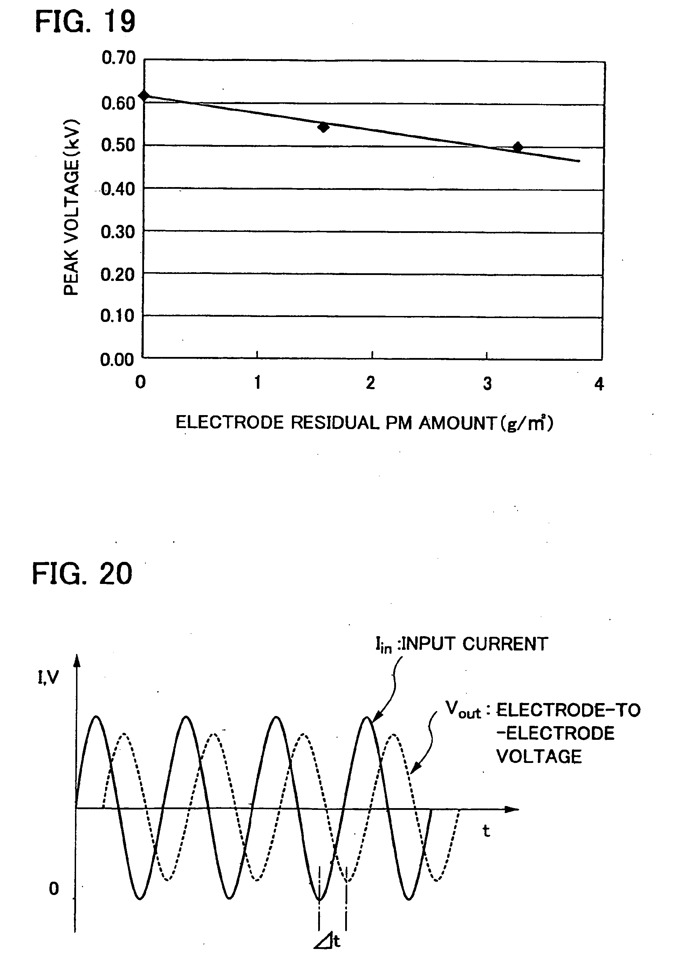

Between a voltage $V_{peak}$ and the amount of the PM deposit, there is a correlation such as shown in Fig. 19. Accordingly, the PM sensor 102 can determine $V_{peak}$ by measuring (monitoring) an electrode-to-electrode voltage of the electrode unit 11 with the voltage measuring instrument 31 and measure the amount of the PM deposit based on a correlation shown in Fig. 19. A configuration, in which data showing the correlation shown in Fig. 19 are stored in the storage unit 13, may be also used.

In a case where the PM sensor 101 is provided with the current measuring instrument 35, calculation of electric power (W) and energy (E) from Equations (1) and (2) described above permits measurement of these calculated values and the amount of the PM deposit.

Here, a description of measurement of the amount of the PM deposit by a oscillation phase change. The PM sensor 102 is configured so as to, in measuring the amount of the PM deposit according to an oscillation phase change, include a resistor having a predetermined resistance value at a position X (in series to the electrode unit 11) shown in Fig. 15, as well as the current measuring instrument 35 to measure a waveform of a power supply output. Fig. 20 shows waveforms of an input current $I_{in}$ and an electrode-to-electrode voltage $V_{out}$ when no electrical discharge occurres between electrodes in the electrode unit 11.

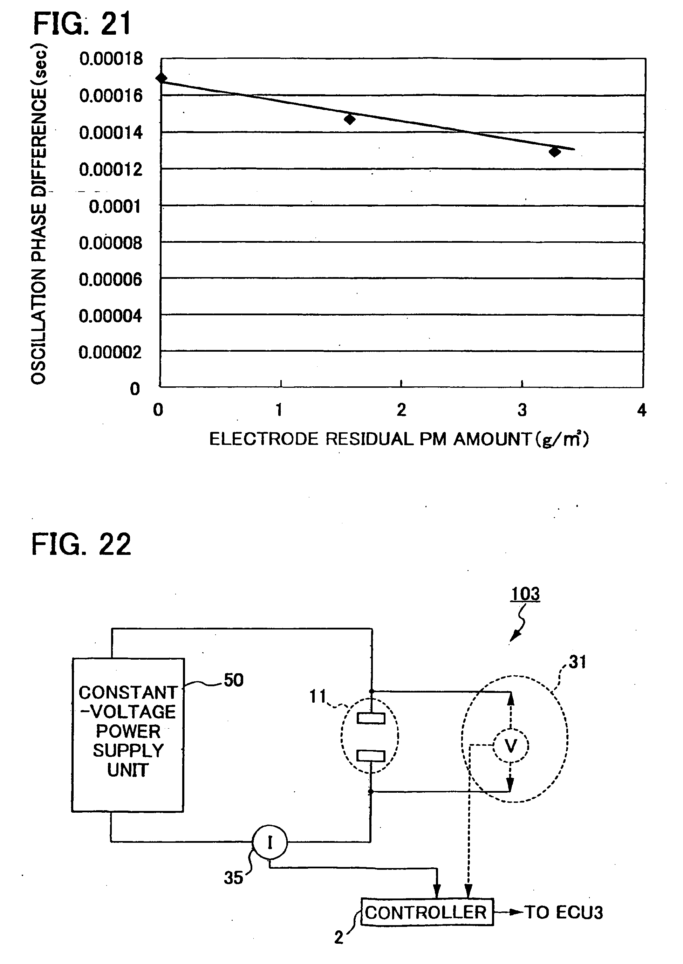

With a power supply output of the continuous constant-current power supply unit 40 taken as $I_{in}(t)$ and a voltage output between electrodes in the electrode unit 11 taken as $V_{out}(t)$, when a difference between two oscillation phases thereof is taken as $\Delta t$, a relationship between the oscillation phase difference and the amount of the PM deposit is as shown in Fig. 21. Accordingly, the PM sensor 102 can determine the oscillation phase difference $\Delta t$ from $I_{in}(t)$ as a power supply output and $V_{out}(t)$ as a voltage output between electrodes and calculate the amount of the PM deposit based on the relationship shown in Fig. 21.

The PM sensor 102 may be configured so as to include a means for transmitting, to the controller 2, a signal capable of measuring a waveform of a current from the operations of the first switching circuit 42 and the second switching circuit 44 of the continuous constant-current power supply unit 40 in place of the current measuring instrument 35 described above.

In this way, the PM sensor 102 can measure the amount of the PM deposit based on a change in electrical characteristics such as a voltage change of the electrode unit 11, using the continuous constant-current power supply unit 40 continuously generating a voltage change. In addition, the PM sensor 102 can calculate PM concentration from a correlation between the measured the amount of the PM deposit and the concentration of PM contained in the measured exhaust gas.

(Fourth Embodiment)

The following description will be made on a PM sensor 103 having a power supply unit 10 constituted of a constant-voltage power supply unit.

The PM sensor 103, as shown in Fig. 22, is composed of an constant-voltage power supply unit 50 intermittently or continuously outputting a constant voltage, the electrode unit 11 and a current measuring instrument 35 performing voltage measurement.

The current measuring instrument 35 is connected with the ECU3 through the controller 2. The controller 2 converts a signal supplied from the current measuring instrument 35 to a signal capable of being handled by the ECU3 and outputs the converted signal to the ECU3.

The ECU3 has a function of measuring a current on the secondary side and, when the current is measurable at that time, the current measuring instrument 35 and the controller 2 may be omitted. In such a configuration, the ECU3 measures electrical characteristic (current) on the secondary side and calculates PM concentration from the measured result.

In a case where a parameter of an electrical characteristic used for PM deposit measurement is electric power (W) or energy (E), the PM sensor 103 is configured so as to further include a voltage measuring instrument 31 for measuring a voltage. The PM sensor 103 calculates energy (E) based on Equation (1) from a voltage (V) measured by the voltage measuring instrument 31 and an electric current (I) measured by the current measuring instrument 35, or electric power (W) based on Equation (2).

Thus, the PM sensor 103 can measure the amount of the PM deposit based on a change in electrical characteristics such as a voltage change of the electrode unit 11 or an oscillation cycle change, using the constant-voltage power supply unit 50 intermittently or continuously generating a current change. In addition, the PM sensor 103 can calculate PM concentration from a correlation between the measured the amount of the PM deposit and the concentration of PM contained in the measured exhaust gas.

(Fifth Embodiment)

The present invention is configured so as to include a PM removal unit 14 for removing PM deposited on the electrode unit 11. The PM removal unit 14 according to the present embodiment may be applied to any mode of the above-described embodiments (PM sensors 1, 100, 101, 102, 103).

The PM removal unit 14 for removing PM deposited on the electrode unit 11 may have any of the following configurations: (1) a first configuration of decomposing and removing PM deposited on the electrode unit 11 by discharging the electrode unit 11; (2) a second configuration of decomposing and removing PM deposited on the electrode unit 11 by discharging the electrode unit 11; or (3) a third configuration of physically removing PM deposited on the electrode unit 11 with a mechanical structure such as brushing, using a knife or spraying (outputting) air pressure.

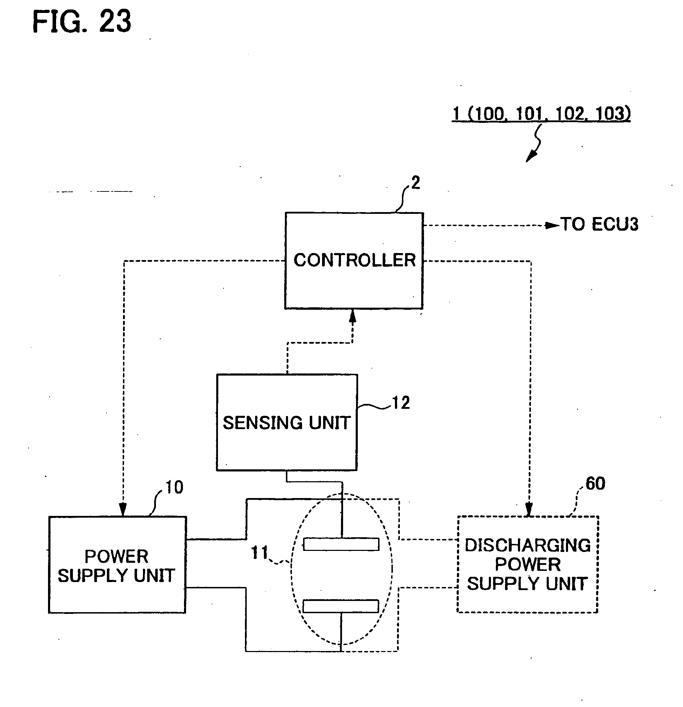

The foregoing first configuration is configured concretely as shown in Fig. 23, so as to include a configuration capable of increasing voltage up to a dischargeable level in an electrode of the electrode unit 11 in the power supply unit 10, or separately to include a discharging power supply unit 60 for exclusive discharge use.

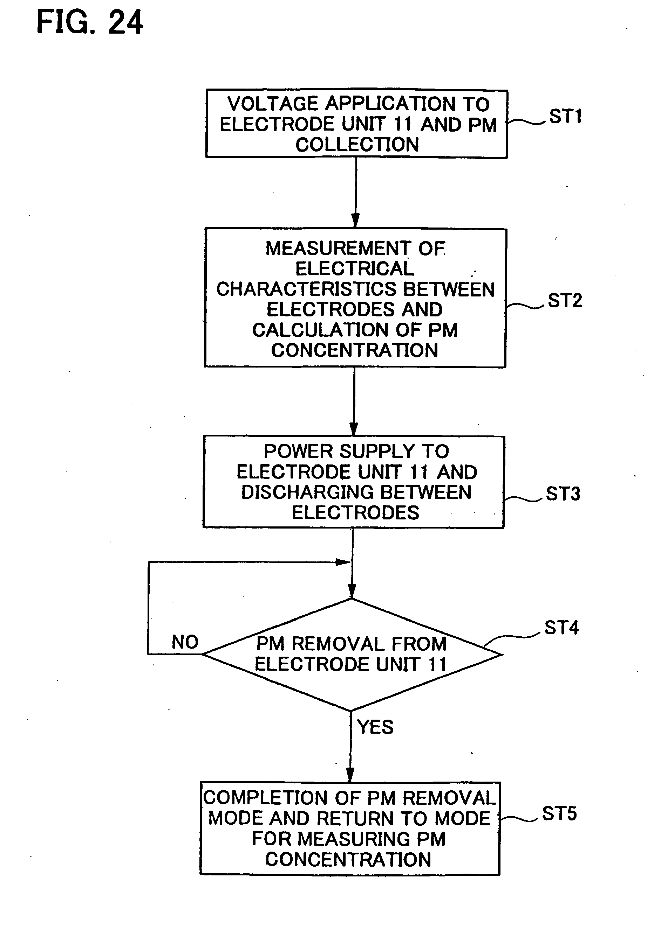

Using a flowchart shown in Fig. 24, next, a step of removing the PM by means of discharge will be described below.

In a step ST1, the PM sensor 1 (100, 101, 102, 103) applies a voltage to the electrode unit 11 to collect the PM.

In a step ST2, the PM sensor 1 (100, 101, 102, 103) measures electrical characteristics between electrodes in the electrode unit 11 and calculates PM concentration. The detailed description of steps ST1 and ST2 are described in the first to fourth embodiments described above.

In a step ST3, the PM sensor 1 (100, 101, 102, 103) controls the power supply unit 10 (or discharging power supply unit 60) and provides power supply to the electrode unit 11 in order to remove the PM adhering to the electrode unit 11. The electrode unit 11 generates a discharge between electrodes by power supply from the power supply unit 10 (or discharging power supply unit 60).

In a step ST4, the PM sensor 1 (100, 101, 102, 103), after discharging of the electrode unit 11, senses electrical characteristics (electrostatic capacity, impedance, inductance, phase, voltage, current, etc) with the sensing unit 12, determines the amount of the PM deposit on the electrode unit 11, and determines whether or not there is PM on the electrode unit 11. When it is determined that the PM still exists (NO), the electrode unit 11 continues discharging and, if it is determined that no PM exists (YES), the procedure advances to step ST5.

In step ST5, the PM sensor 1 (100, 101, 102, 103) completes a PM removal mode to turn off power of the power supply unit 10 (or discharging power supply unit 60) and return to a mode of measuring a PM concentration.

Thus, the PM sensor 1 (100, 101, 102, 103) can directly collect the PM contained in exhaust gas and sense PM concentration based on based on change in electrical characteristics. The PM sensor 1 (100, 101, 102, 103) can remove the PM deposited on an electrode by discharging after sensing of PM concentration without having to significantly change the configuration for sensing the PM concentration. Furthermore, the PM sensor 1 (100, 101, 102, 103), having high durability in a severe environment, and having a simple configuration, can permit cost reduction.

(Sixth Embodiment (1))

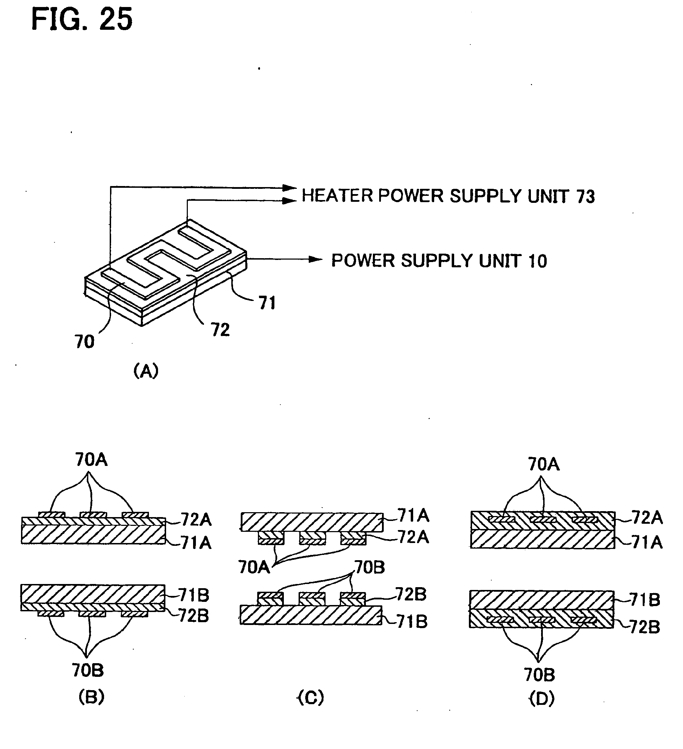

The following description will be made on the above-described second configuration. The second configuration, concretely as shown in Fig. 25A, includes a heating resistor (heater) 70 positioned on an electrode of the electrode unit 11 and is configured so that an electrode deposited with PM is located separately from a heater 70 for removing the PM. The electrode unit 11 having the heater 70 according to the present embodiment may be applied to any mode of the above-described embodiments (PM sensors 1, 100, 101, 102, 103).

The electrode unit 11, as shown in Fig. 25A, is composed of an electrode 71 connected to the power supply unit 10, an insulated unit 72 and the heater 70 connected to a heater power supply unit 73.

Fig. 25B is a sectional view showing a first configuration pattern of the electrode unit 11. An insulated unit 72A (72B) is formed on an electrode 71A (71B) and the heater 70A (70B) is formed on the insulated unit 72A (72B), respectively. The electrode 71A and the electrode 71B are configured so as to face each other at a predetermined gap.

Fig. 25C is a sectional view showing a second configuration pattern of the electrode unit 11. An insulated unit 72A (72B) is formed on an electrode 71A (71B) and the heater 70A (70B) is formed on the insulated unit 72A (72B), respectively. By means of etching treatment, the insulated unit 72A (72B) and the heater 70A (70B) are formed so as to have the same width. The heater 70A and the heater 70B are configured so as to face each other with a predetermined gap.

Fig. 25D is a sectional view showing a third configuration pattern of the electrode unit 11. An insulated unit 72A (72B) enclosing the heater 70A (70B) is formed on an electrode 71A (71B). The electrode 71A and the electrode 71B are configured so as to face each other with a predetermined gap. The above-described first to third configuration patterns are examples and other different configuration patterns may be used.

The heater 70 requires heating to at least approximately 600 degrees at which the PM burns. The electrode unit 11 may use a material functioning as a PM combustion catalyst such as Pt for the electrode 71A (71B) itself, or may be configured so as to apply a PM combustion catalyst to the electrode 71A (71B). Such a configuration permits lowering the heating temperature of the heater 70 to a combustion start temperature with such a catalyst.

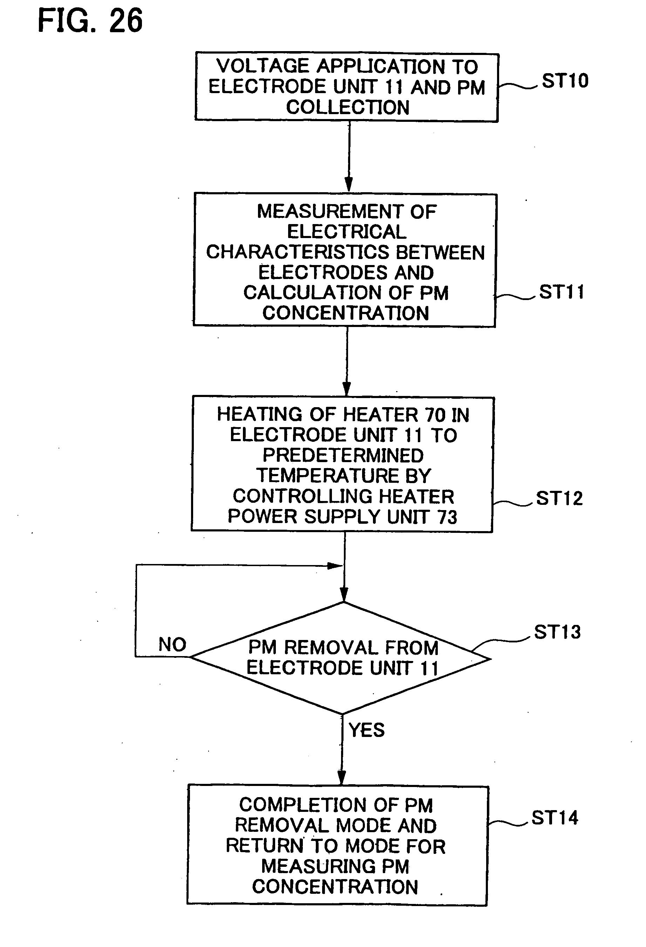

Using the flowchart shown in Fig. 26, the following description will be made of a step of removing the PM deposited on the electrode unit 11 with a configuration to include the heater 70 in the electrode 71A (71B) of the electrode unit 11.

In step ST10, the PM sensor 1 (100, 101, 102, 103) applies a voltage to the electrode unit 11 to collect PM.

In step ST11, the PM sensor 1 (100, 101, 102, 103) measures electrical characteristics between electrodes in the electrode unit 11 and calculates PM concentration. The detailed description of steps ST10 and ST11 is described in the first to fourth embodiments described above.

In step ST12, the PM sensor 1 (100, 101, 102, 103) controls a heater power supply unit 73 and heats the heater 70 of the electrode unit 11 to a predetermined temperature.

In step ST13, the PM sensor 1 (100, 101, 102, 103), after heating the electrode unit 11 to a predetermined temperature, senses electrical characteristics (electrostatic capacity, impedance, inductance, phase, voltage, current, etc) with the sensing unit 12, determines the amount of the PM deposit on the electrode unit 11, and determines whether or not no PM is on the electrode unit 11. If it is determined that the PM still exists (NO), a heating state of the electrode unit 11 is maintained to continue PM removal. If it is determined that no PM exists (YES), the procedure advances to ST14.

In step ST14, the PM sensor 1 (100, 101, 102, 103) completes a PM removal mode to turn off power of the heater power supply unit 73, lower temperature of the heater 70 of the power supply unit 10 and return to a mode of measuring a PM concentration.

Thus, the PM sensor 1 (100, 101, 102, 103) can directly collect PM contained in exhaust gas and sense PM concentration based on a change in electrical characteristics. The PM sensor 1 (100, 101, 102, 103) can remove PM deposited on an electrode by heating with the heater 70 after sensing PM concentration without having to significantly change the configuration for sensing the PM concentration. Furthermore, the PM sensor 1 (100, 101, 102, 103), having high durability in a severe environment and a simple configuration, can permit cost reduction.

(Sixth Embodiment (2))

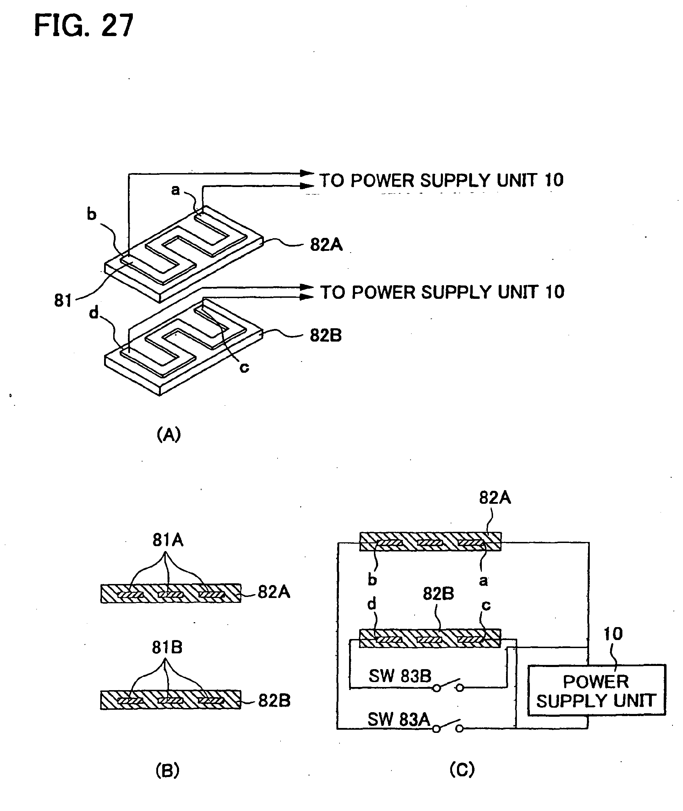

The following description concerns the above-described second configuration. Specifically, as shown in Fig. 27A, a non-conductor (insulator) 82 is applied to an electrode of the electrode unit 11 as a dielectric; and an electrode deposited with the PM and a heater for removing PM are formed integrally with each other. The electrode unit 11 according to the present embodiment may be applied to any mode of the above-described embodiments (PM sensors 1, 100, 101, 102, 103).

Fig. 27B is a sectional view of the electrode unit 11 and shows a condition where the electrode 81A (81B) is formed by being enclosed in an insulated unit 82A (82B).

As shown in Fig. 27C, the electrode unit 11 is configured so that one end "a" of the electrode 81A is connected to the power supply unit 10 and the other end "b" of the electrode 81A is connected to the power supply unit 10 through a switch SW83A, and so that one end "c" of the electrode 81B facing the electrode 81A is connected to a line connecting the switch SW83A with the power supply unit 10 and the other end "d" of the electrode 81B is connected with a line connecting one end "a" of the electrode 81A with the power supply unit 10.

Accordingly, when power supply is provided from the power supply unit 10 to the electrode unit 11 with the switch SW83A and the switch SW83B in an off state, polarization occurs between the electrodes 81A and 81B to collect PM.

When power supply is provided from the power supply unit 10 to the electrode unit 11 with the switch SW83A and the switch SW83B in an ON state, a potential difference occurs between the one end "a" and the other end "b" of the electrode 81A, between the one end "c" and the other end "d" of the electrode 81B to exhibit a function as a heater for removal of PM.

Each of the electrode 81A and the electrode 81B requires heating to at least approximately 600 degrees at which PM burns. The electrode unit 81A (81B) may use a material functioning as a PM combustion catalyst such as Pt for the electrode 81A (81B) itself, or may be configured so as to apply a PM combustion catalyst to the electrode 81A (81B). Such a configuration permits lowering the heating temperature to a combustion start temperature with such a catalyst.

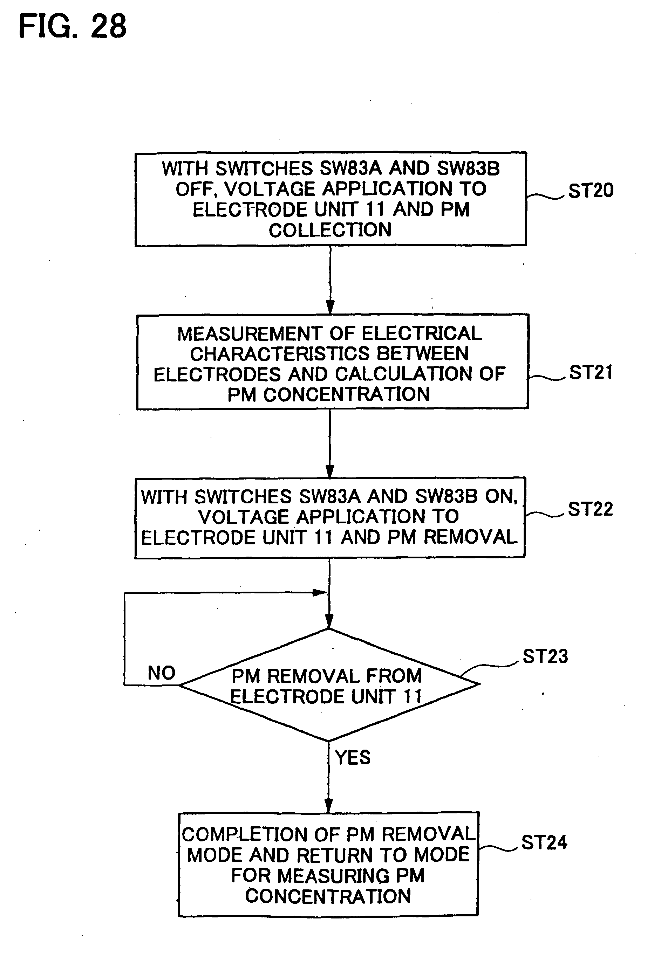

Referring now to a flowchart shown in Fig. 28, a step of removing PM deposited on the electrode unit 11 will be described below.

In a step ST20, the PM sensor 1 (100, 101, 102, 103) applies a voltage to the electrode unit 11 with the switch SW83A and the switch SW83B in an off state to collect PM.

In a step ST21, the PM sensor 1 (100, 101, 102, 103) measures electrical characteristics between electrodes in the electrode unit 11 and calculates a PM concentration. The detailed description of steps ST20 and ST21 is described in the first to fourth embodiments described above.

In step ST22, the PM sensor 1 (100, 101, 102, 103) applies a voltage to the electrode unit 11 with the switch SW83A and the switch SW83B in an ON state to remove the PM.

In step ST23, the PM sensor 1 (100, 101, 102, 103), after heating of the electrode unit 11 to a predetermined temperature, senses electrical characteristics (electrostatic capacity, impedance, inductance, phase, voltage, current, etc) with the sensing unit 12, determines the amount of the PM deposit on the electrode unit 11, and determines whether or not no PM is on the electrode unit 11. If it is determined that PM still exists (NO), a heating state of the electrode unit 11 is maintained to continue PM removal. If it is determined that no PM exists (YES), the procedure advances to moves to ST24.

In step ST24, the PM sensor 1 (100, 101, 102, 103) completes a PM removal mode to turn off power of the power supply unit 10, lower temperature of each of the electrodes 81A and 81B and return to a mode of measuring PM concentration.

Thus, the PM sensor 1 (100, 101, 102, 103) can directly collect PM contained in exhaust gas and sense PM concentration based on a change in electrical characteristics. The PM sensor 1 (100, 101, 102, 103) can remove PM deposited on the electrodes 81A and 81B by heating the electrodes 81A and 81B by switching operations of the switch SW83A and the switch SW83B after sensing PM concentration without having to significantly change the configuration for sensing the PM concentration. Furthermore, the PM sensor 1, having high durability in a severe environment and a simple configuration, can permit cost reduction.

(Seventh Embodiment)

The following description concerns the above-described third configuration. The PM removal unit 14 according to the present embodiment may be applied to any mode of the above-described embodiments (PM sensors 1, 100, 101, 102, 103).

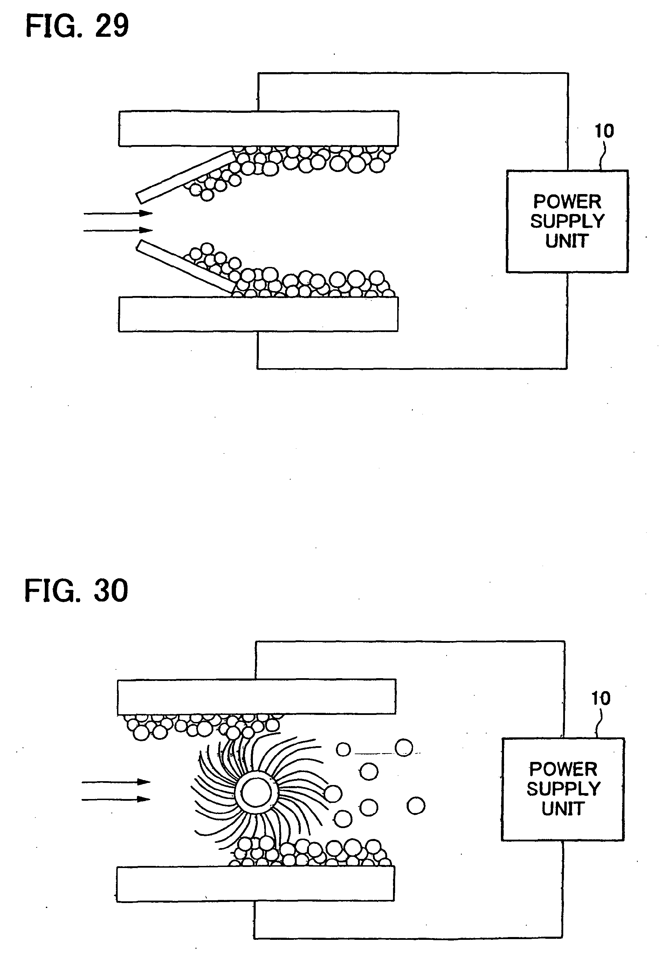

The PM removal unit 14, as shown in Fig. 29, is composed of a knife for removing PM deposited on the electrode unit 11 as the first configuration pattern.

The PM removal unit 14, as shown in Fig. 30, is composed of a brush for removing PM deposited on the electrode unit 11 as the second configuration pattern.

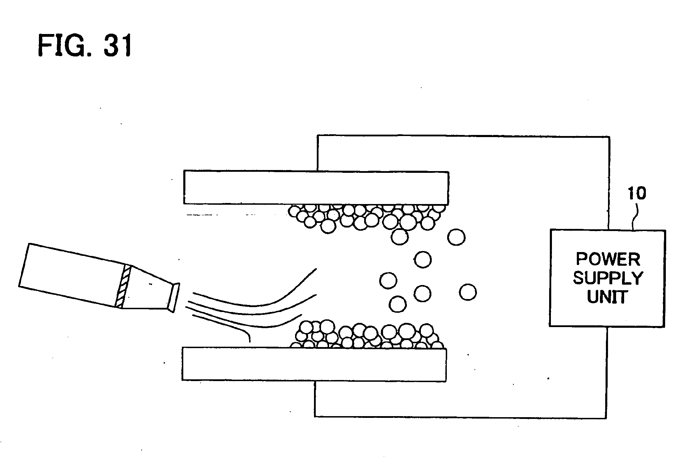

The PM removal unit 14, as shown in Fig. 31, is composed of a mechanism outputting a predetermined air pressure as the third configuration pattern and removes PM deposited on the electrode unit 11 by means of air pressure. The above-described first to third configuration patterns are examples and other different configuration patterns may be used.

Thus, the PM sensor 1 (100, 101, 102, 103) can directly collect PM contained in exhaust gas and sense a PM concentration based on a change in electrical characteristics. The PM sensor 1 (100, 101, 102, 103) can physically remove PM deposited on the electrode unit 11 by driving the PM removal unit 14 constituted of any of the above-described first to third configuration patterns without having to significantly change the configuration for sensing the PM concentration. Furthermore, the PM sensor 1 (100, 101, 102, 103), having high durability in a severe environment and a simple configuration, can permit cost reduction.

**Claims**

1. A sensing device comprising:

an electrode unit (11) to be fitted in an exhaust pipe and composed of a pair of parallel flat plates;
a power supply unit (10) adapted to apply a predetermined voltage to the electrode unit (11);
a sensing unit (12) adapted to measure electrical characteristics of the electrode unit (11) after the power supply unit (10) applies a predetermined voltage to the electrode unit (11) and particulate matter contained in exhaust gas inside the exhaust pipe is deposited onto the electrode unit (11), and adapted to sense the concentration of the particulate matter contained in the exhaust gas inside the exhaust pipe from the measured electrical characteristics, and a removal unit (14) adapted to remove the particulate matter deposited on the electrode unit (11) after the sensing unit (12) senses the concentration of the particulate matter.
**characterized in that** the removal unit (14) is adapted to physically remove the particulate matter deposited on the electrode unit (11) by brushing, using a knife or spraying/outputting air pressure.

2. A sensing method comprising:

a depositing step of applying a predetermined voltage to an electrode unit (11) with a power supply unit (10), and depositing particulate matter contained in exhaust gas in an exhaust pipe onto the electrode unit (11) fitted in the exhaust pipe;
a measuring step of measuring electrical characteristics of the electrode unit (11) after depositing the particulate matter onto the electrode unit (11) in the depositing step;

a sensing step of sensing a concentration of the particulate matter contained in the exhaust gas inside the exhaust pipe from the electrical characteristics measured by the measuring step, and a removing step in which particulate matter deposited on the electrode unit (11) is removed after the concentration of the particulate matter is sensed in the sensing step;
**characterized in that** in the removing step, particulate matter deposited on the electrode unit (11) is physically removed by brushing, using a knife or spraying/outputting air pressure.

**Patentansprüche**

1. Messvorrichtung, umfassend:

eine Elektrodeneinheit (11), die in ein Auspuffrohr einzusetzen ist und aus eine Paar von parallelen flachen Platten zusammengesetzt ist; eine Stromversorgungseinheit (10), die dazu ausgelegt ist, an die Elektrodeneinheit (11) eine vorbestimmte Spannung anzulegen;
eine Messeinheit (12), die dazu ausgelegt ist, die elektrischen Eigenschaften der Elektrodeneinheit (11) zu messen, nachdem die Stromversorgungseinheit (10) an die Elektrodeneinheit (11) eine vorbestimmte Spannung anlegt und sich Partikelmaterial, das im Abgas innerhalb des Auspuffrohrs enthalten ist, auf die Elektrodeneinheit (11) ablagert, und dazu ausgelegt ist, die Konzentration des Partikelmaterials, das im Abgas innerhalb des Auspuffrohrs enthalten ist, aus den gemessenen elektrischen Charakteristiken zu sensieren, und
eine Entfernungseinheit (14), die dazu ausgelegt ist, das auf der Elektrodeneinheit (1) abgelagerte Partikelmaterial zu entfernen, nachdem die Messeinheit (12) die Konzentration des Partikelmaterials sensiert,
**dadurch gekennzeichnet, dass** die Entfernungseinheit (14) dazu ausgelegt ist, das auf der Elektrodeneinheit (11) abgelagerte Partikelmaterial durch Bürsten, mittels einer Klinge oder Sprühen/Ausgeben von Druckluft physikalisch zu entfernen.

2. Messverfahren, umfassend:

einen Ablagerungsschritt zum Anlegen einer vorbestimmten Spannung an eine Elektrodeneinheit (11) mit einer Stromversorgungseinheit (10) und Ablagern von Partikelmaterial, das im Abgas in einem Auspuffrohr enthalten ist, auf die in das Auspuffrohr eingesetzte Elektrodeneinheit (11);
einen Messschritt zum Messen der elektrischen Charakteristiken der Elektrodeneinheit (11) nach dem Ablagern des Parikelmaterials auf der Elektrodeneinheit (11) in dem Ablagerungsschritt;
einen Sensierschritt zum Sensieren einer Konzentration des Partikelmaterials, das im Abgas innerhalb des Auspuffrohrs enthalten ist, aus den vom Messschritt gemessenen elektrischen Charakteristiken, und
einen Entfernungsschritt, in dem auf der Elektrodeneinheit (11) abgelagertes Partikelmaterial entfernt wird, nachdem die Konzentration des Partikelmaterials in dem Sensierschritt sensiert ist; **dadurch gekennzeichnet, dass** im Entfernungsschritt das auf der Elektrodeneinheit (11) abgelagerte Partikelmaterial durch Bürsten, mittels einer Klinge oder Sprühen/Ausgeben von Druckluft physikalisch entfernt wird.

**Revendications**

1. Dispositif de détection comprenant :

une unité d'électrodes (11) à insérer dans un tuyau d'échappement et composée d'une paire de plaques plates parallèles ;
une unité d'alimentation (10) adaptée pour appliquer une tension prédéterminée à l'unité d'électrodes (11) ;
une unité de détection (12) adaptée pour mesurer les caractéristiques électriques de l'unité d'électrodes (11) après que l'unité d'alimentation (10) a appliqué une tension prédéterminée à l'unité d'électrodes (11) et qu'une substance particulaire contenue dans le gaz d'échappement à l'intérieur du tuyau d'échappement a été déposée sur l'unité d'électrodes (11), et adaptée pour détecter la concentration de la substance particulaire contenue dans le gaz d'échappement à l'intérieur du tuyau d'échappement à partir des caractéristiques électriques mesurées ; et
une unité de retrait (14) adaptée pour retirer la substance particulaire déposée sur l'unité d'électrodes (11) après que l'unité de détection (12) a détecté la concentration de la substance particulaire,
**caractérisé en ce que** l'unité de retrait (14) est adaptée pour retirer physiquement la substance particulaire déposée sur l'unité d'électrodes (11) par brossage, en utilisant un couteau ou par pulvérisation/ application d'une pression d'air.

2. Procédé de détection comprenant :

une étape de dépôt consistant à appliquer une tension prédéterminée à une unité d'électrodes (11) par une unité d'alimentation (10), et déposer une substance particulaire contenue dans le gaz d'échappement dans un tuyau d'échappement sur l'unité d'électrodes (11) insérée dans le tuyau d'échappement ;

une étape de mesure consistant à mesurer les caractéristiques électriques de l'unité d'électrodes (11) après le dépôt de la substance particulaire sur l'unité d'électrodes (11) au cours de l'étape de dépôt;

une étape de détection consistant à détecter une concentration de la substance particulaire contenue dans le gaz d'échappement à l'intérieur du tuyau d'échappement à partir des caractéristiques électriques mesurées par l'étape de mesure ; et

une étape de retrait au cours de laquelle la substance particulaire déposée sur l'unité d'électrodes (11) est retirée après que la concentration de la substance particulaire a été détectée à l'étape de détection,

**caractérisé en ce que**, à l'étape de retrait, la substance particulaire déposée sur l'unité d'électrodes (11) est retirée physiquement par brossage, en utilisant un couteau ou par pulvérisation/application d'une pression d'air.

FIG. 1

TO ECU3

2

CONTROLLER

1

| POWER SUPPLY UNIT | → | ELECTRODE UNIT | → | SENSING UNIT |

10    11    14    12    13

PM REMOVAL UNIT

STORAGE UNIT

FIG. 2

TO ECU3

2

100

CONTROLLER

10

POWER SUPPLY UNIT

11

20

IMPEDANCE MEASURING INSTRUMENT

14

# FIG. 3

11A (ALUMINA SUBSTRATE)
11B (TUNGSTEN CONDUCTOR)
11C (TUNGSTEN PRINTING)

50mm

75mm

1mm

(A)

11

SPACE OF
SEVERAL TENS
OF STAGES

20

IMPEDANCE
MEASURING
INSTRUMENT

(B)

## FIG. 4

## FIG. 5

## FIG. 6

## FIG. 7

## FIG. 8

(A)

(B)

FIG. 9

FIG. 10

## FIG. 11

## FIG. 12

## FIG. 13

## FIG. 14

# FIG. 15

# FIG. 16

## FIG. 17

| | |
|---|---|
| —————— | : C(CURRENT(mA)) |
| - - - - - - | : D(INITIAL VOLTAGE) |
| —·——·— | : E(VOLTAGE AFTER PM DEPOSIT) |

Time(sec)

## FIG. 18

## FIG. 19

PEAK VOLTAGE (kV) vs ELECTRODE RESIDUAL PM AMOUNT (g/m²)

## FIG. 20

$I_{in}$ :INPUT CURRENT

$V_{out}$ : ELECTRODE-TO -ELECTRODE VOLTAGE

I,V

$\Delta t$

## FIG. 21

## FIG. 22

# FIG. 23

1 (100, 101, 102, 103)

# FIG. 24

```
┌─────────────────────────┐
│  VOLTAGE APPLICATION TO  │
│  ELECTRODE UNIT 11 AND PM│──── ST1
│       COLLECTION         │
└─────────────────────────┘
            │
            ▼
┌─────────────────────────┐
│    MEASUREMENT OF        │
│      ELECTRICAL          │
│ CHARACTERISTICS BETWEEN  │──── ST2
│    ELECTRODES AND        │
│   CALCULATION OF PM      │
│     CONCENTRATION        │
└─────────────────────────┘
            │
            ▼
┌─────────────────────────┐
│     POWER SUPPLY TO      │
│  ELECTRODE UNIT 11 AND   │
│  DISCHARGING BETWEEN     │──── ST3
│      ELECTRODES          │
└─────────────────────────┘
            │
            ▼
        ◇ PM REMOVAL FROM ◇ ──── ST4
   NO   ◇ ELECTRODE UNIT 11 ◇
            │
           YES
            │
            ▼
┌─────────────────────────┐
│ COMPLETION OF PM REMOVAL │
│ MODE AND RETURN TO MODE  │──── ST5
│   FOR MEASURING PM       │
│     CONCENTRATION        │
└─────────────────────────┘
```

# FIG. 25

HEATER POWER SUPPLY UNIT 73

POWER SUPPLY UNIT 10

70    72    71

(A)

70A

72A
71A

71B
72B

70B

(B)

71A
72A

70A    70B

72B
71B

(C)

70A

72A
71A

71B
72B

70B

(D)

# FIG. 26

```
┌─────────────────────────┐
│   VOLTAGE APPLICATION TO │
│   ELECTRODE UNIT 11 AND PM│──── ST10
│        COLLECTION        │
└─────────────────────────┘
             │
             ▼
┌─────────────────────────┐
│      MEASUREMENT OF      │
│        ELECTRICAL        │
│  CHARACTERISTICS BETWEEN │
│      ELECTRODES AND      │──── ST11
│     CALCULATION OF PM    │
│       CONCENTRATION      │
└─────────────────────────┘
             │
             ▼
┌─────────────────────────┐
│   HEATING OF HEATER 70 IN│
│    ELECTRODE UNIT 11 TO  │
│      PREDETERMINED       │
│      TEMPERATURE BY      │──── ST12
│    CONTROLLING HEATER    │
│   POWER SUPPLY UNIT 73   │
└─────────────────────────┘
             │
             ▼
         ◇─────────◇
   NO   PM REMOVAL FROM   ──── ST13
◄────── ELECTRODE UNIT 11
         ◇─────────◇
             │ YES
             ▼
┌─────────────────────────┐
│    COMPLETION OF PM      │
│   REMOVAL MODE AND       │──── ST14
│   RETURN TO MODE FOR     │
│     MEASURING PM         │
│     CONCENTRATION        │
└─────────────────────────┘
```

# FIG. 27

TO POWER SUPPLY UNIT 10

a

b

82A

81

TO POWER SUPPLY UNIT 10

d

82B

c

(A)

81A

82A

81B

82B

(B)

82A

b

a

d

82B

c

SW 83B

SW 83A

10

POWER
SUPPLY UNIT

(C)

# FIG. 28

```
┌─────────────────────────────┐
│  WITH SWITCHES SW83A AND SW83B │
│  OFF, VOLTAGE APPLICATION TO   │──── ST20
│  ELECTRODE UNIT 11 AND PM      │
│  COLLECTION                    │
└─────────────────────────────┘
              │
              ▼
┌─────────────────────────────┐
│  MEASUREMENT OF ELECTRICAL     │
│  CHARACTERISTICS BETWEEN       │
│  ELECTRODES AND CALCULATION OF │──── ST21
│  PM CONCENTRATION              │
└─────────────────────────────┘
              │
              ▼
┌─────────────────────────────┐
│  WITH SWITCHES SW83A AND SW83B ON, │
│  VOLTAGE APPLICATION TO         │──── ST22
│  ELECTRODE UNIT 11 AND PM REMOVAL │
└─────────────────────────────┘
              │
              ▼
          ◇ PM REMOVAL FROM ◇──── ST23
    NO ◇   ELECTRODE UNIT 11   ◇
       └──────────┘
              │ YES
              ▼
┌─────────────────────────────┐
│  COMPLETION OF PM REMOVAL      │
│  MODE AND RETURN TO MODE       │──── ST24
│  FOR MEASURING PM              │
│  CONCENTRATION                 │
└─────────────────────────────┘
```

# FIG. 29

# FIG. 30

## FIG. 31

POWER
SUPPLY
UNIT

10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030123059 A
- US 6786075 B
- JP 2006208123 A
- GB 2395567 A
- WO 03034053 A2
- DE 19824744 A1
- DE 3414542 A1
- US 20050279084 A1